Europäisches Patentamt

European Patent Office

Office européen des brevets

(11) Publication number: **0 520 129 A1**

# EUROPEAN PATENT APPLICATION

(21) Application number: **92100703.5**

(22) Date of filing: **17.01.92**

(51) Int. Cl.5: **H04B 7/185**

(30) Priority: **26.06.91 EP 91110536**

(43) Date of publication of application:
**30.12.92 Bulletin 92/53**

(84) Designated Contracting States:
**AT BE CH DE DK ES FR GB GR IT LI LU MC NL PT SE**

(71) Applicant: **ANT Nachrichtentechnik GmbH**
**Gerberstrasse 33**
**W-7150 Backnang(DE)**

(72) Inventor: **Gast, Thomas, Dipl.-Ing.**
**Schwalbenweg 30**

**W-7057 Leutenbach(DE)**
Inventor: **Klein, Claus, Dipl.-Ing.**
**Birkfeld 13**
**W-7155 Oppenweiler(DE)**
Inventor: **Maier, Hubert, Dipl.-Ing.**
**Hessigheimer Strasse 4**
**W-7150 Backnang(DE)**
Inventor: **Schwamberger Hans, Dipl.-Ing.**
**Breiter Weg 3**
**W-7440 Nürtigen(DE)**
Inventor: **Steinmeyer, Werner, Dipl.-Ing.**
**Herdfeld 7**
**W-7065 Winterbach(DE)**

(54) **System for management, controlling and monitoring states of earth stations for satellite communications.**

(57) System for management, controlling and monitoring states of earth stations for satellite communications with a plurality of transmission and other devices (e.g. power supplies), each or only some of these devices having means for measuring and controlling their states, with a management data base (DCMS), a real-time controlling computer (RCS), a number of workstations links between the management data base (DCMS) and the real-time controlling computer (RCS) and between the real-time controlling computer (RCS) and each or only some of the measuring and controlling means of the transmission and other devices and a bus system (LAN) between the real-time controlling computer and the workstations.

Fig. 1

Rank Xerox (UK) Business Services

The present invention relates to systems for management, controlling and monitoring states of devices of earth stations for satellite communications.

According to the present invention there is provided a system for management, controlling and monitoring states of earth stations for satellite communications with a plurality of transmission and other devices (e.g. power suppliers), each or only some of these devices having means for measuring and controlling their states with

- a real time controlling computer
- a number of workstations
- links between the management data base and the real time controlling computer and each or only some of the measuring and controlling means of the transmission and other devices
- a bus system between the real time controlling computer and the workstations

In order that the invention may be readily understood an embodiment will now be described with reference to the accompanying drawings, in which

Fig. 1      shows a block diagram of the management and control system

Fig. 2      shows a more detailed block diagram of the management and control system

Fig. 3      shows the real time controlling computer, the management date base, workstations and the bussystem

Fig. 4-6    show screen-layouts of the workstations

The next is a list of abbreviations as used in the following description.

List of Abbreviations:

| | |
|---|---|
| ACU | Antenna Control Unit |
| DB | Data Base |
| DCMS | Data Management, Control and Monitoring System |
| DMS | Data Management System |
| DNC | Downconverter |
| EIRP | Equivalent Isotropically Radiated Power |
| HF | High Frequency |
| HLS | Waveguide Switch |
| HPA | High-Power-Amplifier |
| HV | High Voltage |
| IDR | Intermediate Date Rate |
| LAN | Local Area Network |
| MMI | Man Machine Interface |
| PPM | Peak Power Meter |
| RCS | Real-time Control System |
| SSA | Switch Structured Analysis |
| TDMA | Time Division Multiple Access |
| TV | Television |
| UPC | Upconverter |

The main features of the computer system for monitoring and controlling earth stations are:

- full colour graphics
- data management (data storage and evaluation)
- new man-machine interface (MMI)
- integrated development environment standardized operating system

The DCMS mainly consists of tow computer systems:

- real-time control system (RCS)
- data management system (DMS)

The two computer systems communicate over a special interface, but otherwise they operate fully independently. There is a rough division of workload between the two computers in real-time tasks such as redundancy switching, carrier suppression etc. performed by the RCS and tasks such as data management, graphic displays etc. performed by DMS.

Since the system is divided in an RCS system and a DMS system, it is also possible to expand existing station computers by matching them to a DCMS or coupling the to a DMS.

The DMS shall control and display the telecommunications equipment installed in the stations, such as modulators, line amplifiers etc., and the waveguide switching system. Since the type and number of connected equipment varies from station to station, it is possible to match the display and control functions

2

for earth stations.

The DMS was mainly conceived for the control and monitoring of single antenna systems. It consists of the following components:

**Main control unit**

- workstation with memory
- colour graphics terminal
- keyboard, mouse
- tape streamer
- disk printer

**Remote station(s)**

- workstation with memory
- hard disk
- colour graphics terminal
- keyboard, mouse
- disk printer

The number of remote workstations can currently be extended. All system processes run on the central DMS. The remote DMS acts as a graphics support service system with its own operating system.

The graphics symbols and related input/output menus are provided in the DMS for earth stations for the following equipment or subsystems.

| Equipment | Textual name |
|---|---|
| High Power Amplifier | HPA |
| Upconverter | UPC |
| Modulator | MOD |
| IF Unit | IFN |
| Peak Power Meter | PPM |
| Thermal Power Meter | PPM |
| Sound in Sync Encoder | SIE |
| Subcarrier Modulator | SCM |
| Synthesizer | SYN |
| Linearizer | LIN |
| Downconverter | DNC |
| Demodulator | DMD |
| Sound in Sync Decoder | SID |
| Low Noise Amplifier | LNA |
| Beacon Receiver | BCR |
| Beacon Downconverter | BDC |
| Subcarrier Demodulator | SCD |
| HPA Rack | RAC |
| Digital Phase Shifter | DPS |
| Line Amplifier | DLA |

| Antenna | Textual name | Type |
|---|---|---|
| Step Track Unit | STU(K) | 0 |
| Motor Control Unit | MCU(K) | 1 |
| Meteorological Station | MTS(R) | 2 |

| Miscellaneous | Textual name |
|---|---|
| Aperture Blower Control | ap-blow-al |
| Antenna End Position Switch | ant-endp-al |
| Antenna Elevation | ant-elev-al |
| Open Hatch | open-hatch-al |
| Waveguide Dehydrator | waveg-deh-al |
| Airconditioning | aricondition-al |
| HPA Ventilation | hpa-ventil |
| Power Supply Line Amplifier | ps-LNA-al |
| Poser Supply LNA System | ps-LNA-sys-al |
| Power Supply Switch | ps-swi-al |
| Power Supply IF Unit | ps-ifu-al |
| Power Supply Us alert | ps-us-al |
| Antenna Heater Control | ant-heat-al |
| No Break Alert | no-break-al |
| Short Break Alert | sh-break-al |
| Power Supply Mimic Diagram | ps-md-al |
| Servo Failure | mcu-servo-al |
| Tracking Error | mcu-track-al |

**Switches:**

Transfer Switches
Coupled transfer switch
4-way switch (four positions)
PIN diode switch (2 to 1, 4 to 1, 7 to 1)
The DMS allows the user to:
- quickly detect the state of an earth station displayed on process-controlled colour graphics
- log the state of the system
- perform all controls required for operations
- generate log diagrams and inputs himself
The earth stations con be monitored and controlled by a remote control system. A remote interface could be provided for this purpose in the DMS. The following commands will be executed via the remote interface:
switch control
control of HPA standby, beam on/off
control of upconverter/downconverter attenuation
upconverter carrier on/off
upconverter/downconverter frequency adjustment

4

IF modules
change in EIRP, setpoint
reset redundant switch unit automatic/manual
erase fault memory
and request the following states:
state of all equipment connected
frequency adjustment
switch settings
operating mode of redundant switch units
operating mode of DCMS
equipment level alarms detected by DCMS (calculated)
EIRP measured values, carrier names
alarm memory
fault memory

Diagnosis and Maintenance:

The DMC is capable of remote diagnosis and remote maintenance Suitable hardware and software interfaces are implemented to provide the following functions:
-  modem connection
-  X.25 protocol, Datex-P

A remote login shall be provided for diagnosis purposes and this shall be capable of checking all functions. It is also possible to load software updates remotely.

The DMS and RCS are autonomous systems; i.e., should one system fail, the other system should not be blocked. On the failure of one of the systems and after the end of communication breaks, the systems exchange their data.

Access to the system is protected by means of various user names and passwords. Several users and their password can be set-up by a super user. A user can only operate or control the system after completing a login procedure. If possible, all inputs relating to the display of the system and equipment states are possible without password protection.

DCMS configurability (option):

The user is capable of independently creating and modifying the graphic layout of a system. He must comply with specified name conventions for symbols (invisible) and pop-up menus. The name conventions are necessary for tieing in processing routines. Irrespective of this, the symbols can be provided with any names on the graphics interface (visible).

The concatenation of system elements can be described in a configuration file. Moreover, global system parameters such as the number of screens, can be determined in a configuration file.

The DMS can be operated in the local or remote modes. In the local mode, the system can be operated centrally or remotely via the consoles and screen of the DMS.If the DMS is switched to remote mode, all operating functions may be triggered by a remote control system The remote mode is currently not foreseen and the interface is not programmed. However, it can be implemented, if required.

Since a DMS can be equipped with two or more workstations, the command authorization is managed for the workstations. Two possibilities are provided for assigning authorization and one can be selected during system configuration.
-  Master/slave concept: command authorization can be relinquished to another workstation and recovered. As default, the master workstation is authorized to input.
-  Multimaster concept: the master function can be fully relinquished to another workstation from the master workstation.

All electrically driven switches can be switched over from the input/output unit. For operating reasons, an HLS is not immediately switched over. The switchover operation is divided into the phases "Preselect" and "Execute", Acknowledged actual positions of the switches (electrically driven and manually operated switches) depicted in the block diagrams are displayed by white lines in the switch symbols. During the preselect, the preselected position is also displayed in a different colour in the switch symbol. As switch is preselected by clicking a switch symbol and a pop-up menu appears next to the selected switch. The desired switch preselect position can then be selected in the pop-up menu. The switchover operation is triggered by clicking a separate "Execute" button. The execute function acts on all systems switches.

The following attributes can be assigned to a switch in the configuration file:
- electrically driven or manually operated
- coupled switches
- switch type: 2-way transfer switch
  4-way switch
  PIN-diode switch with 2 positions
  PIN-diode switch with 4 positions
  PIN-diode switch with 7 positions

Operating equipment combined with standby equipment in a redundancy switching group can be automatically switched over in the event of a fault. Redundancy switching can take place only in the automatic mode. In the automatic mode, transmission paths (equipment HLS) in which equipment has failed during service or switch generate alarms can be switched over to redundant transmission paths. In the manual mode, alarms do not cause automatic redundancy switchovers.

If waveguide switches in the transmission path of a carrier located behind the output of the power amplifiers (in the direction of the antenna) are switched over, it is ensured that the associated carrier is suppressed during the switchover time to prevent any power reflection at the switch. on completion of switchover, the carrier is restored. Suppression shall normally not exceed 300 msec.

If an operating path is switched over to a redundancy path, the DCMS ensures that the redundancy path retains the same operating parameters as the previous operating path (e.g. attenuation setting).

In order to measure the Equivalent Isotropically Radiated Power EIRP, up to 20 carriers can be defined or initialized. A carrier can be initialized by clicking a carrier symbol in the input gate of the carrier in the block diagram. Carrier initialization comprises the following components:
- carrier name
- priority
- service (Television TV or Time Division Multiple Access TDMA)
- transponder number (if TDMA)
- measurement on/off
- lower cut off value
- upper cut off value

The conversion constants require to calculate the Equivalent Isotropically Radiated Power EIRP is entered at the measuring points for the carrier (pin-diode switches ahead of measuring instrument). After clicking a measuring point symbol, a conversion constant can be entered at this measuring point for each carrier. A maximum of 20 measuring point can be created.

The Equivalent Isotropically Radiated Power EIRP measured value display is called up by clicking the "EIRP measurement" button in the form of a graph comprising bar charts of the various carriers or in form.

The Data Management, Control and Monitoring System DCMS is capable of automatically measuring the Equivalent Isotropically Radiated Power EIRP of TDMA (Time Division Multiple Access)-, IDR (Intermediate Data Rate)- and TV (Television)-carriers.

Measurement can take place in the automatic and manual mode. In the automatic mode, the powers of all initialized carriers are continuously measured and converted to EIRP values. In the manual mode, the position of the measuring point can be preselected from the input unit.

Changing the Equivalent Isotropically Radiated Power EIRP can be performed by clicking the carrier symbol. After selecting Change the EIRP, a modification can be specified within the range 0 to 31.5 dB in 0.5 dB steps for the carrier. The EIRP modification is performed by the carrier-related upconverter. The EIRP modification is entered in relative values.

The following inputs can be made for the weather-related EIRP control by clicking "EIRP-Control".
- fine weather EIRP
- max. EIRP increase
- calculation factor
- control on/off
- hysteresis EPRP control

To ensure that the signal flow density remains as constant as possible at the input of the satellite, it is possible to control the EIRP depending on the weather. The Date Management Control and Monitoring System DCMS calculates the atmospheric attenuation by means of the beacon emitted by the satellite and derives the required increase in EIRP. The EIRP increase is controlled by the power output amplifier (analog voltage), the upconverters (attenuators) or the IF units.

The local signal alerts the operator to the fact that at least one of the connected equipment units is not switched to remote mode. Up to five local group signals can be generated. The signals can be generated by the user in the configuration file as an OR gate of the individual equipment local signals.

In the local mode, however, settings can be performed directly on the equipment. These settings shall be detected and transferred by the DCMS. This means that, if the equipment is switched over from the local to the remote mode, their setting shall not change due to the remote control from the DCMS.

The system state and the time base are detected at regular intervals and stored. Between storage events, only the changes are detected and stored. Therefore, the DMS is able to reconstruct the total system state for each point of time between two storage events.

The system stores:

- operating and alarm states of the equipment
- frequencies and attenuations
- measured Equivalent Isotropically Radiated Power
- switch positions
- entered operator parameters of (e.g. carrier names, reference constants, etc.)

Changes in EIRP are detected in 0.5 dB steps, i.e. a change in EIRP only causes the storage of the new EIRP value if it lies in a different 0.5 dB step than the previous value. The stored system states are stored on tape for archieving purposes.

The system is easy to use for the operator, i.e. menu-driven inputs or use of windowing techniques are offered. System status is displayed on the DMS on an colour grapics monitor and the operator is capable of capturing the total system state in several degrees of detail (zooming method: overview, subsystems, blocks, individual units. Each layer transfers the main information to the previous layer. Equipment status is displayed by means of one or several graphics images (images of system block diagram) using a defined colour coding of equipment symbols (e.g. power amplifier, upconverter). In addition to the overview state display of an equipment unit, a window containing detailed information on equipment status is opened by clicking or selection. It is also possible to control the equipment from the window. The possible functions and inputs which the operator can enter into each window is explained by a help function providing operation and execution support.

There are following inputs in the Date Management System DMS.

**a) Parameters for weather-related EIRP control (option)**

fine-weather beacon level

mas. EIRP increase

version factor

weather-related EIRP control on/off

hysteresis EIRP control

**b) Carrier inputs**

carrier names

priority

service (TV/TDMA)

transponder number

lower threshold value

upper threshold value

EIRP measurement on/off

EIRP changes

carrier frequency

carrier on/off

**c) EIRP measurement of carriers**

reference constants for EIRP measurements

automatic/manual

**d) Upconverter**

carrier on/off

attenuation

frequency

**e) Downconverter**

carrier on/off

frequency

**f) Power amplifier**

HV on/off

Power on/off

Cannel selection

Beam /off

Reset

**g) Switching switches**

preselect one or several switches

cancel preselect

switchover command

**h) Redundancy switching**

automatic/manual

normalise

**i) Each equipment unit**

ignore / don't ignore alarm

**j) Diagnosis**

read/erase error memory (RCS)

address of output memory areas (RCS)

**k) Level monitoring (option)**

threshold values

monitoring on/off

**l) switchover input authorization**

**m) acoustic alarm on/off**

**n) Step Track Unit**

stop

preset (azimuth + elevation setpoints)

step track (satellite)

memory track

The station overview displays the following subsystems in symbolic manner (rectangle):

uplink system

downlink system

antenna system

miscellaneous

and their main states, e.g. all systems in a subsystem OK

The subsystem views uplink and downlink display the subsystems in the form of block diagrams. Each of the units and switches are displayed and signated by symbols. The main equipment states res displayed by symbol colour coding.

All input operating parameters are displayed to the operator. They are:

**a) Weather-related EIRP control (options)**

fine-weather beacon level

max. EIRP increase

current EIRP increase

conversion factor

weather-related EIRP control on/off

**b) Carrier inputs**

carrier names

priority

service (TV/TDMA)

transponder number

lower threshold value

upper threshold value

EIRP measurement on/off

EIRP changes

carrier frequency

carrier on/off

**c) EIRP measurement of carriers**

reference constants for EIRP measurements

automatic/manual

**d) Redundancy**

automatic/manual

reset

**e) Each equipment unit**

ignore / don't ignore equipment unit alarm, list of equipment with alarm ignore state

**f) Level monitoring (option)**

current level

threshold value level monitoring

level monitoring on/off

**g) Messages**

fire alarm

fault in fire alarm system

acoustic alarm on/off

**h) Command input point**

**i) Local group signal**

**j) Output EIRP values**

The EIRP values shall be output in the form of a bar chart.

**k) Output of error memory (RCS)**

The errors occurring during operation are stored in an error memory. The errors are put out in plain text.

**l) Reconstruction of system states**

The system states stored in the memory are put out in chronological order. The operator can specify time markers and select conditions (e.g. all alarm after 8 am(date, all HPA alarms etc.) The following basic evaluation programs are provided:

- reconstructing of total system status at time xxx
- reconstruction of alarm state at time xxx
- equipment change state zzz between time xxx and time yyy
- EIRP carrier zzz from time xxx to time yyy

The output is displayed on an screen and/or to printer.

**m) State displays and their scope**

The state display of a station and its equipment consists of several levels based on the top-down principle. The upper layer form the overview image with its functional blocks: uplink, downlink, antenna system and miscellaneous. At this level, only group alarms and the operation mode of the redundancy switches are displayed using the colour coding of the subsystem symbols. It is possible to determine the cause of messages by zooming in on individual subsystems. The colour coding and plain text conventions are maintained at all display levels.

In the following text means:

| | |
|---|---|
| **Window:** | On-screen working area (movable, open, closed) |
| **ICON:** | Group symbol for a subsystem |
| **Button:** | Push button (triggered by mouse) |
| **Pull-down menu:** | Menu which can be locally opened by clicking |
| **Scroll bar:** | For handling large texts (positioning) |

The user interface is initially based on following dynamic windows:

| | |
|---|---|
| **Action window:** | containing menu buttons, pull-down menus, block diagrams (special assemblies can be selected in the display and new action windows can be opened/zoomed), state displays; action windows are the basis. |
| **Text window:** | for handling large text (e.g. log) containing restricted menu (e.g. QUIT command, PRINT command) and scroll bar. |
| **Input window:** | to key in command parameters with restricted menu (e.g. OK command, QUIT command). |
| **Help window:** | a special text window explaining commands (in each action window there is a menu command HELP). After selecting the help button, a help window is generated containing the help on current window). |
| **Input bug window:** | for error handling with invalid inputs. |

Commands are generally executed by clicking with the mouse.

The operative characteristics are:

select an object using the mouse

-> click

-> menu

-> select menu command

-> click

-> activate input

-> confirm by Execute or Return key

This provides the operator with a uniform procedure for operating the MMI (easy to learn + safety).
Components of Man-Machine-Interface (so-called primitives)

## – window primitives

## Action window

Main windows: graphics shall be displayed in these windows.
Description:
Window with
  - menu bar
    button for QUIT -> close window
    button for HELP -> select help function
    environments-specific buttons
  - icons: subsystem symbols
    attributes: colour (alarm, etc.)
    effect of clicking: open a new action window (zooming)
  - equipment symbols
    attributes: colours (alarm, etc.)
    effect of clicking: output state information on equipment
  - primitive equipment symbols: no effect on clicking. Only layout design.
  - line display: connectors between equipment units attributes: colour lads active carrier.

## Text window and Help window

Extensive logs are displayed in text windows.
Description:
Window with
  - menu bar (button for QUIT -> close text windows
  - text area
  - scroll bar

## Input window

For parameter input, an input option exists: generate a small window containing text (e.g. name of input parameter) and input area. Syntax errors are displayed immediately (e.g. incorrect real number format).

## Command inputs

Commands are basically execute by clicking the mouse:
  - command in a menu line
  - equipment symbols in graphics display
  - other command and parameter displays in window currently on screen
A distinction is made for the three methods of executing this selected command:
  - commands requiring no further parameter input
  - commands containing an unambiguously defined number of parameters values
  - commands containing several parameters (values and/or equipment symbols) (e.g. switches which may only be operated simultaneously)
Explanations not leading to the execution of a command or commands which cannot be executed in the current state shall be recognizable as such (e.g. light/dark hue). This shall also apply to the graphics display (e.g. for switches on the redundancy switch unit which cannot be switched).
  For incomplete commands, all these selected parameters (values and/or preselected switches) are cancelled if the command level is quitted before execution.

Annex  − 1 −

<u>Layout of graphic symbols</u>

<u>Note:</u>   The display of graphic symbols is determined in the graphics editor (e.g. alarm colour = red).

subsystem symbol : (Icon) e.g.
I1 station, I2 uplink, I3 downlink,
I4(antenna system, I5 miscellaneous
Attributes:
graphics display:
depending on equipment group symbol;
The display can change dynamically depending on the equipment group state (local/remote).
Colour: alarm, OK , etc. (dynamic change)
Position: determined e.g. in graphics editor
Name: text (local/remote)
Display: - all alarms acknowledged
        - at least one unacknowledged alarm
        - no alarm

additional:

|  | Alarm | Alarm acknowledged | OK | Local |
|---|---|---|---|---|
| Colour | red flashing | red |  | green | Summary Local |

The local group signal of a subsystem can be displayed in text form or can be coded in the colour of the subsystem symbol. The following shall apply for colour coding:

light colours (e.g. light red for alarm) if no local message exists

ˌdark colours, if local messages exist

Equipment unit symbol:
Attributes:
graphics displayed:
depending on equipment symbols;
The display can dynamically change depending on equipment state (local/remote).
Colour: alarm, OK, etc. (dynamic change)
Position: determined e.g. in graphics editior
Name: equipment designation, local/remote (dynamic)
Display: - operation
        - alarm not acknowledged
        - alarm acknowledged
        - standby
        - not connected
        - alarm iguore

Annex – 2 –

| | Alarm Standby or Operation | Alarm not acknowledged Standby or Operation | OK Standby | OK Operation | not connected | Alarm ignored |
|---|---|---|---|---|---|---|
| Colour | red | red flashing | yellow | green | orange | blue |

The following applies for colour coding:

light colours (e.g. light red for alarm) if no local message exists     or alternative
                                                                          textual: local

dark colours, if local message exists

Transfer switch:
 Attributes:
  Graphics display: switch symbol
   The display can change depending on the switch state. Distinguish whether switching already
   executed or only reselected.
   Colour: determined e.g. in graphics editor
   Position: determined e.g. in graphics editor
   Name: fixed text
   Display: - switch position 1, selected
            - switch position 2, selected
            - switch position 1
            - switch position 2

position is displayed in white color
selected position in


4-way switches:
 Attributes:
   Graphics display: position switch; can change depending on switch state. + distinction whether
   switching already executed or only reselected.
   Colour: determined e.g. in graphics editor
   Position: determined e.g. in graphics editor
   Name: fixed text
   Display: - switch in position 1 - 4, selected
            - switch in position 1 - 4
       4 possible positions (45° rotation)

Annex - 3 -

Connecting lines:
Attributes:
  Graphics display: lines between graphic symbols
    Colour: determined e.g. in graphics editor;
      Service channels are colour coded.

      Connecting lines conveying a carrier are displayed green.
      Connecting lines conveying no carrier shall be displayed white.

  Position: determined e.g. in graphics editor
  Name: fixed text

Simple equipment unit: (no commands, no status)
Attributes:
  Graphics display: depending on equipment symbols;
    Colour: determined e.g. in graphics editor
    Position: determined e.g. in graphics editor
    Name: fixed text

(*) Button:
Attributes:
  Graphics display: uniform (e.g. rectangle)
    Colour: determined for two states
          selectable:          colour = blue
          not selectable:   colour = grey
      Position: determined e.g. in graphics editor
      Name: fixed text
      Display: - selectable
                 - not selectable

Annex - 4 -

- <u>Changing graphics symbol attributes</u>

The display of MMI devices can change by means of operator inputs or changes in the data base ( = hardware state). The standards is described here:

non-acknowledged alarm:
  Effect on:
    a. equipment symbol activating the alarm
       colour: alarm colour (flashing)
    b. alarm acknowlegdment button of originating equipment (now selectable)
    c. Subsystem symbol(s) located within the scope of the originating equipment.
       colour: alarm colour (flashing)

acknowledged alarm (by pressing alarm acknowledge button of the equipment):
  Effect on:
    a. equipment symbol activating the alarm
       colour: alarm colour (not flashing)
    b. alarm acknowledgment button of originating equipment ( not selectable)
    c. Subsystem symbol (s) contained in scope of originating equipment.
         colour: alarm colour (not flashing), if no further unacknowledged alarm is present).

<u>Note:</u>    If an equipment unit is not in an alarm state, its alarm acknowledgment button is not selectable.

The transition from not acknowledged alarm - to OK state is displayed in the form:
the equipment symbol remains state flashing until the alarm has been acknowledged while the color of the equipment symbol shows the actual.

change in switch states (physical/by switching OK button):
  Effect on:
      The display of all selected switch symbols change to the actual position after acknowledgment of the completed switchover to the hard wiring.

change in switch state :
  Effect on:
    The switch symbol indicates the selected position.

local/remote change:
  Effect on:
    Colour change of equipment symbol or textual display of local state.

effects when switch states change:
  Effect on:
    switch display (e.g. position 1 < - > 2 position 2)
    The display of the operating paths change accordingly.

Group alarms are always displayed in a particular area (window) (irrespective of the subsystem in which the operator is working). The fire alarm message is displayed separately.

The language of the display text is English, but it is easily modifiable.

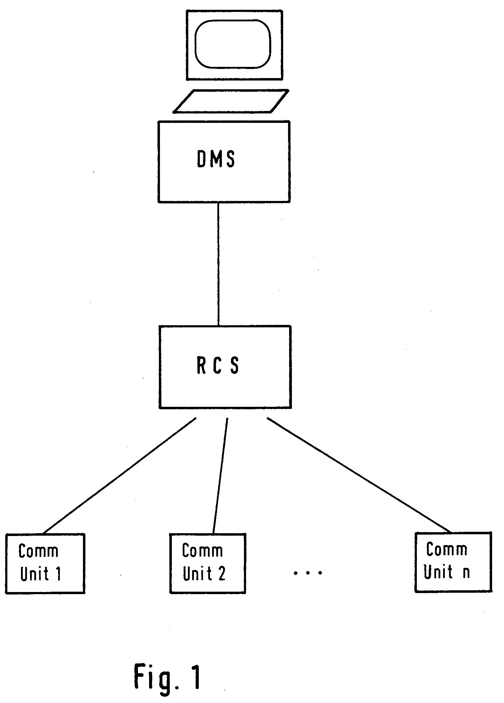

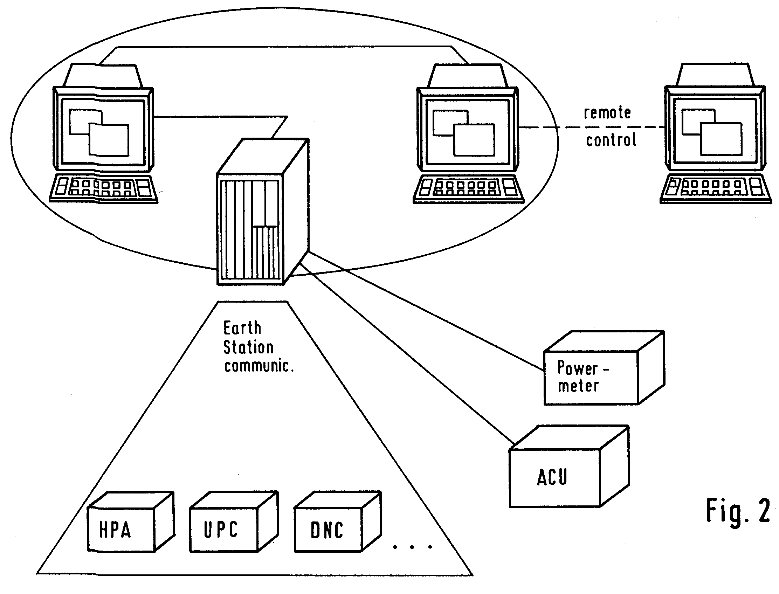

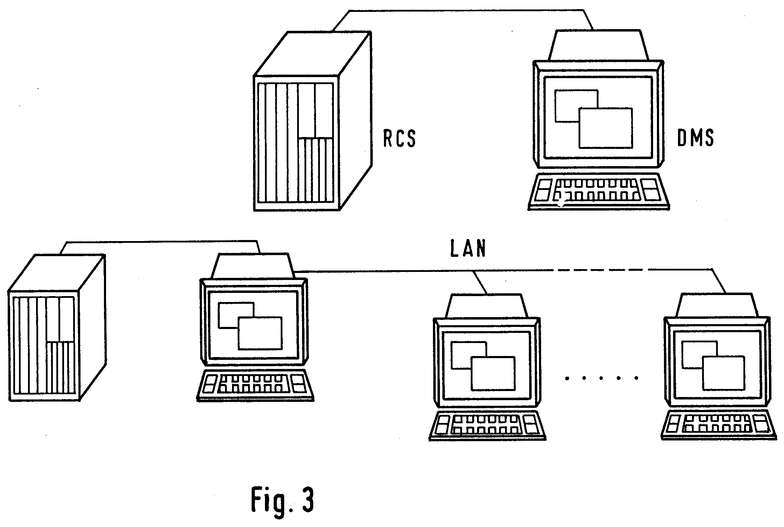

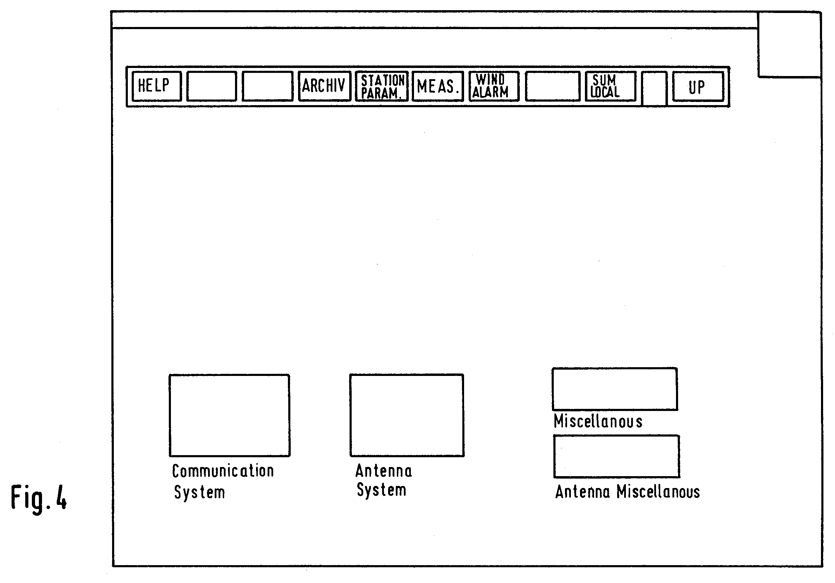

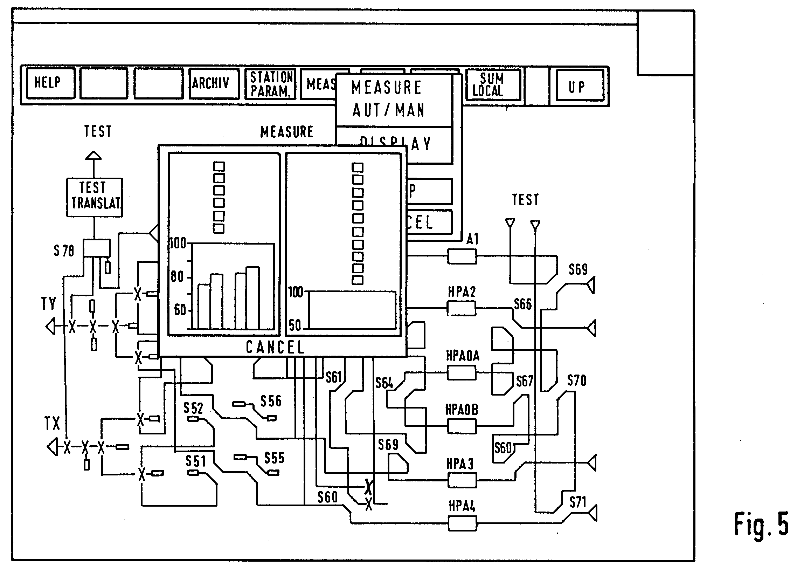

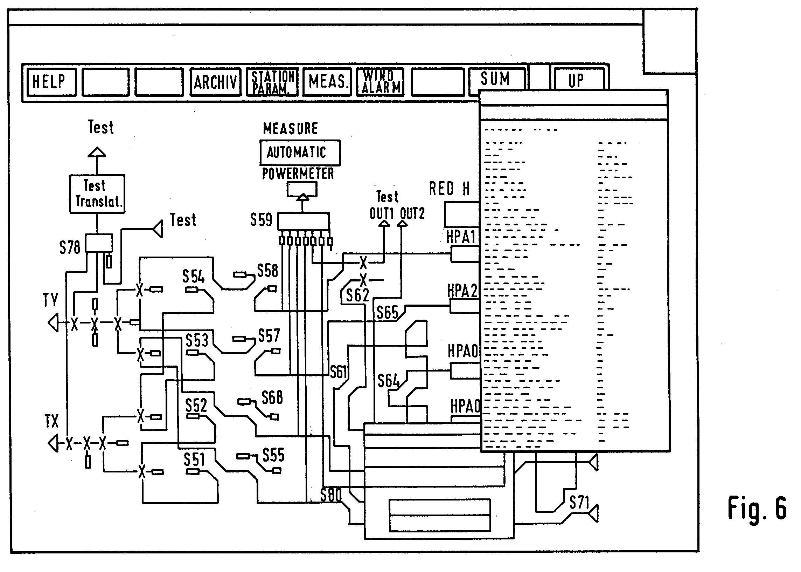

## Claims

1. System for management, controlling and monitoring states of earth stations for satellite communications with a plurality of transmission and other devices (e.g. power supplies), each or only some of these devices having means for measuring and controlling their states, with a management data base (DCMS), a real-time controlling computer (RCS), a number of workstations links between the management data base (DCMS) and the real-time controlling computer (RCS) and between the real-time controlling computer (RCS) and each or only some of the measuring and controlling means of the transmission and other devices and a bus system (LAN) between the real-time controlling computer and the workstations.

2. System as claimed in claim 1, wherein the workstations having a multi window program.

3. System as claimed in claim 1 or 2, where in the workstations having a colour graphics screen and different states of the devices are displayed in different colours.

DMS

RCS

Comm
Unit 1

Comm
Unit 2

· · ·

Comm
Unit n

# Fig. 1

Fig. 2

Fig. 3

EP 0 520 129 A1

EP 0 520 129 A1

| HELP | | | ARCHIV | STATION PARAM. | MEAS. | WIND ALARM | | SUM LOCAL | | UP |

Communication
System

Antenna
System

Miscellanous

Antenna Miscellanous

Fig.4

Fig. 5

EP 0 520 129 A1

Fig. 6

EP 0 520 129 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | NEC RESEARCH AND DEVELOPMENT. no. 83, October 1986, TOKYO JP pages 66 - 75; Y.HOSHINO ET AL: 'IBM/SMS Earth Station' * page 72, left column, line 23 - page 74, left column, line 8; figure 4 * | 1-3 | H04B7/185 |
| A | JAPAN TELECOMMUNICATION REVIEW. vol. 2, no. 1, January 1990, TOKYO JP pages 44 - 52; K.HAYASHI ET AL: '14/12-GHZ-band Satellite Communication Services' * page 51, line 12 - page 52, line 3; figure 10 * | 1 | |
| A | IEEE COMMUNICATIONS MAGAZINE. vol. 27, no. 5, May 1989, US pages 43 - 49; K.M.SUNDARA MURTHY: 'VSAT Networking Concepts and New Applications Development' * page 45, right column, line 20 - line 29 * | 1 | |
| A | EP-A-0 317 974 (NEC) * claim 1; figure 1 * | 1 | TECHNICAL FIELDS SEARCHED (Int. Cl.5 )  H04B |

The present search report has been drawn up for all claims

| Place of search | Date of completion of the search | Examiner |
|---|---|---|
| THE HAGUE | 25 AUGUST 1992 | CRETAINE P.A. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.............................................................................
& : member of the same patent family, corresponding
    document

EPO FORM 1503 03.82 (P0401)